# EUROPÄISCHE PATENTSCHRIFT

(11) **EP 1 996 871 B1**
(45) Veröffentlichungstag und Bekanntmachung des Hinweises auf die Patenterteilung: **17.09.2014**
(21) Anmeldenummer: 06828512.1
(22) Anmeldetag: 15.11.2006
(51) Int. Cl.: F24H 4/04, F25B 49/04

(54) **VORRICHTUNG ZUR STEIGERUNG DER HEIZLEISTUNG UND ENERGIEPUFFERUNG BEI EINER WÄRMEPUMPE**
DEVICE FOR INCREASING THE HEATING CAPACITY AND ENERGY BUFFERING IN A HEAT PUMP
DISPOSITIF PERMETTANT D'AUGMENTER LA PUISSANCE CALORIFIQUE ET L'ACCUMULATION D'ENERGIE SUR UNE POMPE A CHALEUR

(30) Priorität: 17.11.2005 DE 102005055512; 02.11.2006 DE 102006052166
(43) Veröffentlichungstag der Anmeldung: 03.12.2008
(73) Patentinhaber: Hombücher, Heinz-Dieter, 63179 Obertshausen (DE)
(72) Erfinder: Hombücher, Heinz-Dieter, 63179 Obertshausen (DE)
(74) Vertreter: Stahl, Dietmar
(86) Internationale Anmeldenummer: PCT/DE2006/002002
(87) Internationale Veröffentlichungsnummer: WO 2007/059732

(56) Entgegenhaltungen:
- EP-A1- 0 042 795
- DE-A1- 2 809 425
- US-A1- 4 796 437
- US-A1- 5 269 153

## Beschreibung

Die Erfindung betrifft eine Wärmepumpe mit einer Vorrichtung zur Steuerung der Heizleistung der Wärmepumpe mit Pufferung der Wärmeenergie nach dem Oberbegriff des Patentanspruchs 1.

Wärmepumpen werden in der Heiz- und Lüftungstechnik und zur Wärmerückgewinnung ein- gesetzt. Dabei wird häufig ein Wärmeträger (Wasser, Sole usw.) zur Übertragung der Heizenergie eingesetzt. Der Wärmeträger durchströmt dabei einen Verflüssiger einer Wärmepumpe und nimmt dort die Energie der Wärmepumpe auf. Der Wärmeträger wiederum transportiert die Energie zum Verbraucher und überträgt die Energie, dabei wird der Wärmeträger abgekühlt anschließend zurück zur Wärmepumpe transportiert und im Verflüssiger wiederum erwärmt. Damit der Wärmeträger im Kreislauf rotiert wird meistens ein Hydraulikmodul, bestehend aus einer Umwälzpumpe, Rohrleitungen, Absperrarmaturen, Regelarmaturen, Manometer und Thermometer eingesetzt.

In der Kältetechnik sind ebenfalls so genannte Enthitzer für die Wärmerückgewinnung bei der Kälteerzeugung bekannt. Mit einem Enthitzer wird aus dem Heißgasstrom eines Kältekreislaufes direkt nach dem Verdichter der Kältemaschine die Energie aus dem Kältekreis entnommen. Mit dem Heißgas kann eine höhere Wassertemperatur als mit dem Verflüssiger erzeugt werden, dieses ist wichtig bei der Brauchwassererwärmung.

In der Literatur werden Wärmepumpen vielfältig beschrieben. Die Unterteilung erfolgt nach Wasser-Wasser-Wärmepumpen, Sole-Wasser-Wärmepumpen und Luft-Wasser-Wärmepumpen. Die Energie wird von verschiedenen Wärmequellen geliefert. Dabei werden unterschiedlichste Hydrauliksysteme gewählt. Derartige Systeme sind bekannt und werden häufig angewandt. In den meisten Fällen wird ein Behälter zur Volumenvergrößerung genommen. Hiermit wird die Taktfrequenz der Verdichter beeinflusst, Energie gespeichert und die Wärmeabgabe am Verbraucher reguliert. Aus wirtschaftlichen und ökologischen Gründen wird auch der bivalente Betrieb mit Wärmepumpe und Heizkessel gewählt.

In der Veröffentlichung "Recknagel, Sprenger, Schramek, Taschenbuch für Heizung und Klimatechnik 01/02, Ausgabe 2001, Oldenbourg Industrieverlag München" werden auf den Seiten 569 ff verschiedene Techniken zum Wärmeträgerkreislauf beschrieben.

In der Offenlegungsschrift DE 10 2004040737 A1 wird eine Vorrichtung zur Regelung einer konstanten Vorlauftemperatur beschrieben.

Aus US 4,796,437 A 1 ist ein Wärmepumpenkreislauf nach dem Oberbegriff des Anspruchs 1 bekannt, der mit einem Speicherkreislauf zusammenwirkt. Dabei ist ein Enthitzer vorgesehen, der als paralleler Wärmeübertrager zum Wärmepumpenkreislauf gestaltet ist und mit dem Wasser in einem Tank erwärmt wird.

Aus DE 28 09425 A 1 ist eine Einrichtung bekannt, die keinen Enthitzer aufweist. Im Kältekreis ist weiterhin kein Wärmeübertrager vorgesehen, der zuerst von einem Wärmeträgermedium durchströmt wird, wobei anschließend ein weiterer Wärmeübertrager durchströmt wird, der das Wärmeträgermedium weiter aufheizt.

Aus US 5,269,153 ist ein System mit drei Wärmeübertragern bekannt, die in Reihe geschaltet sind. Mit diesem System kann nicht die Enthitzung aus dem Kältekreis geregelt werden. Es ist auch im Weiteren keine entsprechende Betriebsart genannt.

In den herkommlichen Wärmepumpen wird der gesamte Energiegehalt des Kältemittels im Verflüssiger an den Wärmeträger übertragen. Aus dem beschriebenen Stand der Technik ergibt sich die höchste Wärmeträgertemperatur am Austritt des Wärmeträgers nach dem Verflüssiger.

Aufgabe der Erfindung ist es, das Temperaturniveau des Wärmeträgers anzuheben und die maximal mögliche Energiemenge im Pufferbehälter zu speichern.

Dabei muss berücksichtigt werden, dass der Energiegehalt des Kältemittels sich bei einer bestimmten Verflüssigungstemperatur nicht ändern kann. Wird jedoch ein höheres Temperatumiveau des Wärmeträgers erreicht, kann zum erreichen der gewünschten Wärmeträgertemperatur die Verflüssigungstemperatur gesenkt werden, mit der Folge, dass die elektrische Leistungsaufnahme des Verdichters gesenkt wird und sich die Leistungsziffer des Verdichters verbessert. Ebenfalls kann mit dem höheren Temperaturniveau im Pufferspeicher mehr Energie eingelagert werden, das verringert die Täktfrequenz des Verdichters und somit die Lebensdauer des Verdichters.

Die Lösung der Aufgabe zur Anhebung der Wärmeträgertemperatur gestaltet sich nach den kennzeichnenden Merkmalen des Anspruches 1.

Die Lösung zur Pufferung der Energie, bei konstanter Wärmeträgervorlauftemperatur, nach den kennzeichnenden Merkmalen des Anspruches 2.

Die Vorrichtung enthält eine hydraulische Schaltung mit Pufferspeicher zur Anhebung der Wärmeträgertemperatur. Ebenfalls kann mit dieser Schaltung die Speicherung der Energie auf höherem Temperaturniveau im Teillastbetrieb vorgenommen werden, bei konstanter oder nachgeregelter Vorlauftemperatur.

Die Erfindung gestaltet sich in einem Hydrauliksystem, das einen Pufferspeicher, eine Umwälzpumpe, Rohrleitungen, erforderliche Armaturen für die Be- und Entlüftung, Armaturen für die Regelung sowie Gewährleistung der Betriebssicherheit, Temperatur- und/oder Druckaufnehmern, sowie wenigstens einen Enthitzer und/oder einen Verflüssiger in Reihe oder Parallel geschaltet.

Der Pufferspeicher ist dabei vorzugsweise als Schichtenspeicher derart ausgebildet, dass warmer Wärmeträger an dessen Oberseite entnommen und auch von oben wieder eingespeichert wird und dass kalter Wärmeträger an dessen Unterseite entnommen und ebenfalls von unten wieder eingespeichert wird. Zur Vereinfachung des Hydraulikmoduls, kann unter Beibehaltung der beschriebenen Energiepufferung nach dem Schichtspeichersystem der Erhitzer bei einfachen Systemen entfallen.

Durch das Zusammenwirken der genannten Bauelemente ist es möglich, die Leistungsziffer des/der Verdichter bei vergleichbarer Wärmeträgervorlauftemperatur zu verbessern, die Vorlauftemperatur des Wärmeträgers konstant zu halten und im Teillastbetrieb eine höhere Wärmeträgertemperatur als die Wärmeträgervorlauftemperatur im Pufferbehälter zu speichern. Eine Wärmepumpe kann mit dieser Erfindung auch im niedrigen Temperaturniveau betrieben werden ohne die Verdichtereinsatzgrenzen zu unterschreiten.

In bevorzugter Ausführungsform wird die Reihenschaltung von Verflüssiger und Enthitzer für die Anhebung der Wärmeträgertemperatur gewählt. Mit den optionalen Dreiwegeventilen wird die volle Heizleistung der Wärmepumpe mit dem Wärmeträger direkt zum Verbraucher geführt oder bei Überschuss der Heizleistung der wärmere Wärmeträger in den Pufferbehälter geführt. Mit einem weiteren optionalem Dreiwegeventil kann verhindert werden, dass der Verbraucher dem Wärmeträger zuviel Energie entzieht und die Verflüssigungstemperatur dadurch soweit absinkt, dass die Verdichtereinsatzgrenzen unterschritten werden.

Die mit der Erfindung erzielbaren Vorteile bestehen unter anderem in den im Folgenden beschriebenen vorteilhaften Wirkungen:
1. Es wird eine Verbesserung der Leistungsziffer der Wärmepumpe erzielt.
2. Im Pufferbehälter kann Wärmeträger mit einer höheren Temperatur gespeichert werden als für die Wärmeträgervorlauftemperatur am Verbraucher benötigt wird
3. Im Pufferbehälter kann mehr Energie gespeichert werden
4. Der Pufferspeicher kann kleiner gewählt werden
5. Der Pufferbehälter ist als Schichtenspeicher ausgebildet, d.h. warmer Wärmeträger wird oben entnommen und auch von oben eingespeichert und kalter Wärmeträger wird unten entnommen und ebenfalls von unten eingespeichert.
6. Es wird sichergestellt, dass die Verdichtereinsatzgrenzen nicht unterschritten werden.
7. Die Erfindung ist dezentral oder in einem Wärmepumpengehäuse integriert nutzbar.
8. Die Wärmeträgervorlauftemperatur kann nachgeregelt werden
9. Die Energieabgabe kann begrenzt werden
10. Ein Heizkessel oder anderer Energieerzeuger ist in das Hydrauliksystem integrierbar.
11. Die Betriebskosten für die Wärmepumpe werden minimiert
12. Die Lebensdauer der Wärmepumpe wird verlängert
13. Der CO₂-Ausstoß wird vermindert

Die Erfindung wird im Folgenden beispielhaft näher beschrieben.

Die zugehörigen schematischen Darstellungen zeigen in
Fig. 1 eine erste Ausführungsform der erfndungsgemäßen Vorrichtung,
Fig. 2 eine zweite Ausführungsform der erfindungsgemäßen Vorrichtung,
Fig. 3 eine dritte Ausführungsform der erfindungsgemäßen Vorrichtung,
Fig. 4 eine vierte Ausführungsform der erfindungsgemäßen Vorrichtung,
Fig. 5 eine fünfte Ausführungsform der erfindungsgemäßen Vorrichtung,
Fig. 6 eine Darstellung der Temperaturen einer Wasser-Wasser-Wärmepumpe,
Fig.7.1 bis 7.4 Darstellungen des Hydrauliksystems und eines Kältekreises einer Wärmepumpe
mit Umkehrschattung für den Kühlbetrieb und Abtauschaltung, Fig. 8.1 und 8.2 eine Wasser-Wasser-Wärmepumpe mit Schichtenspeicher auf der kalten und der warmen Fluidseite der Wärmepumpe.

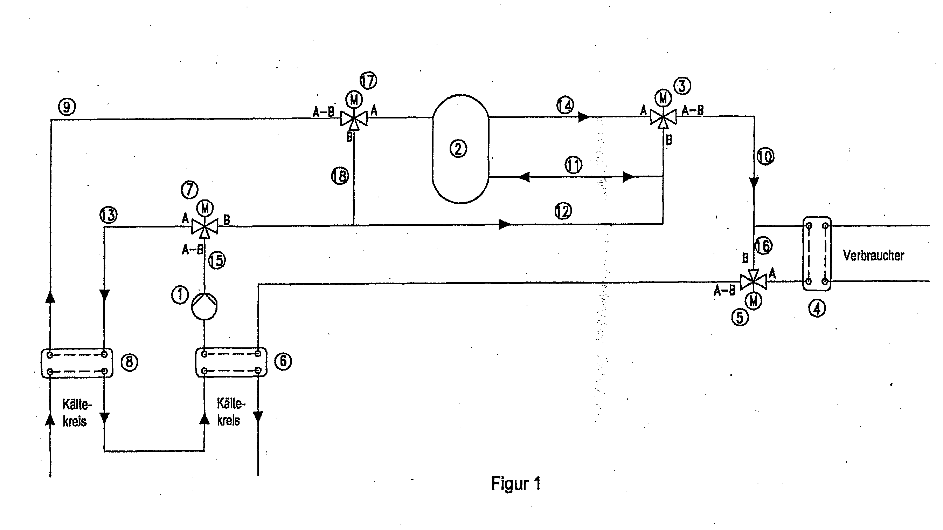

Die erfindungsgemäße Vorrichtung wird im Wesentlichen in einer Reihenschaltung eines Enthitzers 8 und eines Verflüssigers (Wärmetauschers) 6 in einem Speicherkreis und diesen steuernden Regelventilen 3, 5, 7, 17 gemäß Fig. 1 realisiert.

Ein Wärmeträgerkreislauf für den Wärmetransport zwischen einer Wärmepumpe und einem Verbraucher ist einerseits mittels eines Verflüssigers (Wärmetauschers) 6 und eines Enthitzers 8 der Wärmepumpe und andererseits mittels eines Wärmetauschers 4 über das Rohrleitungssystem mit dem Verbraucherkreis gekoppelt. Mittels einer Umwälzpumpe 1 wird der Wärmeträger im Speicherkreis umgewälzt. Der Wärmeträger durchströmt zuerst den Verflüssiger (Wärmetauscher) 6 und ein Anteil durchströmt anschließend den Enthitzer 8. Mit einem Dreiwegeventil 7 wird der Anteil zum Nacherwärmen durch den Enthitzer 8 gesteuert. Im Enthitzer 8 wird der Wärmeträger nachgeheizt und einer Rohrleitung 9 zugeführt. Für das Dreiwegventil 7 kann als kostengünstige Lösung auch in einfacher Weise eine in ihrem Durchsatz steuerbare Umwälzpumpe mit Förderwirkung in Richtung des Enthitzers 8 eingesetzt werden. Weiterhin sind auch andere Stellventile bzw. Drossel- und Verteilelemente verwendbar.

Das Arbeitsmittel (Kältemittel) durchströmt zuerst den Enthitzer 8 und anschließend den Verflüssiger (Wärmetauscher) 6. Die Heizleistung der Wärmepumpe kann somit nach dem Verflüssiger (Wärmetauscher) 6 auf ein höheres Temperaturniveau gebracht werden, da im Enthitzer 8 das Arbeitsmittel noch gasförmig ist und auch gasförmig bleibt, demgemäss von einem höheren Temperaturniveau gekühlt werden kann. Damit findet im Enthitzer 8 eine Heißgaskühlung des Kältemittels statt. Der Verflüssiger (Wärmetauscher) 6 übernimmt nur noch die Arbeit der Verflüssigung und Unterkühlung des Kältemittels. Arbeitet also auf einem bereits abgesenkten Temperaturniveau. Dies kommt der Beanspruchung der Wärmepumpe zugute.

>

Mit einem Dreiwegeventil 17 werden die Volumenströme des Wärmeträgers vom Verflüssiger (Wärmetauscher) 6 und vom Enthitzer 8 mittels einer Rohrleitung 18 wieder vereint und über Rohrleitungen 12 und 10 dem Verbraucher zugeführt.

Im Teillastbetrieb wird ein maximal möglicher Volumenstromanteil mit dem Dreiwegeventil 17 in einen Speicherbehälter (Pufferspeicher) 2 geleitet. Der in den Speicherbehälter (Pufferspeicher) 2 eingebrachte Wärmeträger verlässt diesen über Rohrleitungen 14 oder 11, je nach dem ob der Speicherbehälter (Pufferspeicher) 2 mit kalten oder warmen Wärmeträger gefüllt ist. Ist der Speicherbehälter (Pufferspeicher) 2 mit wärmerem Wärmeträger gefüllt als für die Wärmeträgervorlauftemperatur am Verbraucher benötigt wird schaltet der Verdichter ab, bei mehrstufigen Wärmepumpen schaltet ein Verdichter ab.

Wird von der Wärmepumpe der Wärmeträger nicht ausreichend erwärmt, wird dieser über ein Dreiwegeventil 3 anteilig durch den Speicherbehälter (Pufferspeicher) 2 geleitet, verdrängt warmen Wärmeträger aus dem Speicherbehälter (Pufferspeicher) 2 und gelangt über die Rohrleitung 14 und das Dreiwegeventil 3 zum Verbraucher. Ist in dem Speicherbehälter (Pufferspeicher) 2 nicht genügend warmer Wärmeträger vorhanden schaltet ein Verdichter wieder zu. Eventuell erzeugte überschüssige Energie wird über eine Rohrleitung 9 und das Dreiwegeventil 17 wieder in den Speicherbehälter (Pufferspeicher) 2 geführt und dort gespeichert. In der beschriebenen Betriebsweise wird der Speicherbehälter (Pufferspeicher) 2 als Schichtenspeicher genutzt, das bedeutet, dass dem Speicherbehälter (Pufferspeicher) 2 entweder
- an seiner Oberseite warmer Wärmeträger zugeführt und an seiner Unterseite kalter Wärmeträger entnommen wird oder
- dass an der Unterseite kalter Wärmeträger zugeführt wird, während gleichzeitig an der Oberseite warmer Wärmeträger entnommen wird.

Die vom Verbraucher benötigte Vorlauftemperatur wird mit dem Dreiwegeventil 3 geregelt. Ein optionales Dreiwegeventil 5 dient mittels Rohrleitung 16 zur Begrenzung der Energieabnahme beim Verbraucher. Damit wird verhindert, dass vom Verbraucher zu kalter Wärmeträger zurückkommt, welcher die Verflüssigungstemperatur im Verflüssiger (Wärmetauscher) 6 soweit absenken könnte, dass der Verdichter außerhalb der Betriebsgrenzen betrieben würde.

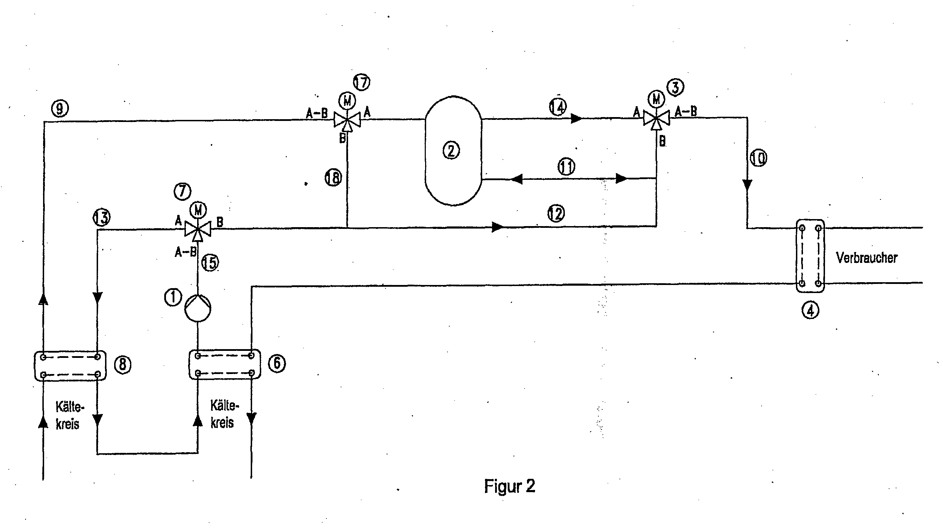

In Figur 2 ist die ist die Ausführungsvariante des Speichersystems nach Figur 1 ohne die Rohrleitung 16 und das Dreiwegeventil 5 dargestellt. Damit wird das Speichersystem vereinfacht und es wird lediglich auf die Regelungsvariante der Begrenzung der Energieabnahme am Verbraucher versichtet. Die Kann für weitere Bereiche des Betriebs der Anlage völlig ausreichend sein.

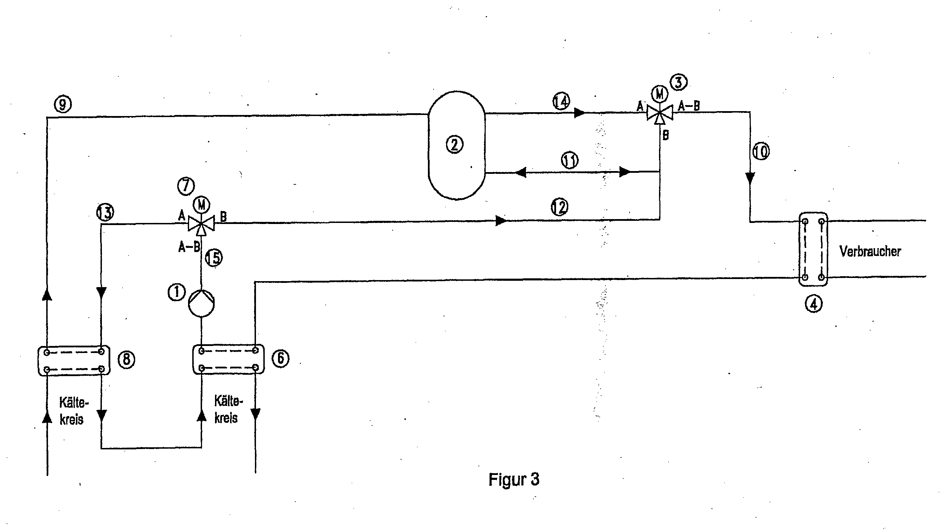

In Fig. 3 ist die Variante des Speichersystems nach Fig. 2 ohne Rohrleitung 18 und Dreiwegeventli 7 dargestellt. So lässt sich das Speichersystem weiter vereinfachen. Dabei wird in diesem Fall lediglich auf die Regelvariante für den Teillastbetrieb des Speichersystems zur Bestimmung des max. möglichen Volumenstromanteiles, der in den Speicherbehälter (Puffer-speicher) 2 geführt werden soll, verzichtet. Diese Ausführungsform kann ebenso wie diejenige nach Fig. 2. für weite Bereiche des Betriebs der Anlage völlig ausreichend sein.

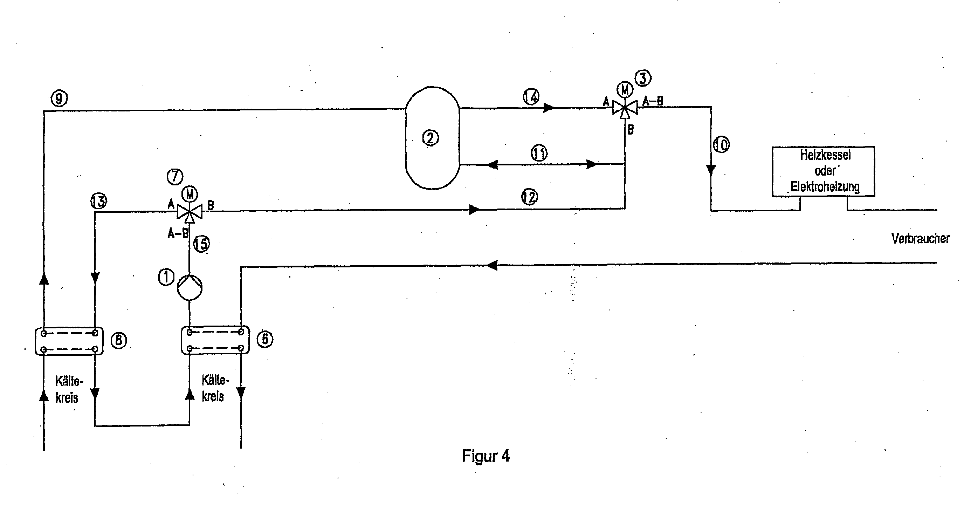

In Fig. 4 ist in einer Aufführungsform nach Fig. 3 als optionale Ausrüstmöglichkeit der Anlage ein so genannter Nacherhitzer, z.B. in Form eines Heizkessels oder einer Elektroheizung für die Versorgung des Verbrauchers dargestellt. Der Nacherhitzer kann über die verschiedensten bekannten Heizungssysteme den Wärmeträger nachheizen oder autark erwärmen. Hier kann gemäß Fig. 1 bis 3 dem Nacherhitzer nachgeordnet der Wärmetauscher 4 zum Anschluss des Verbrauchers vorgesehen sein. Damit wird ein bivalenter Betrieb der Wärmepumpe erreicht. Weiterhin kann der Nacherhitzer in den Speicherkreislauf vor dem Eintritt des Wärmeträgers in den Speicherbehälter (Pufferspeicher) 2 angeordnet sein.

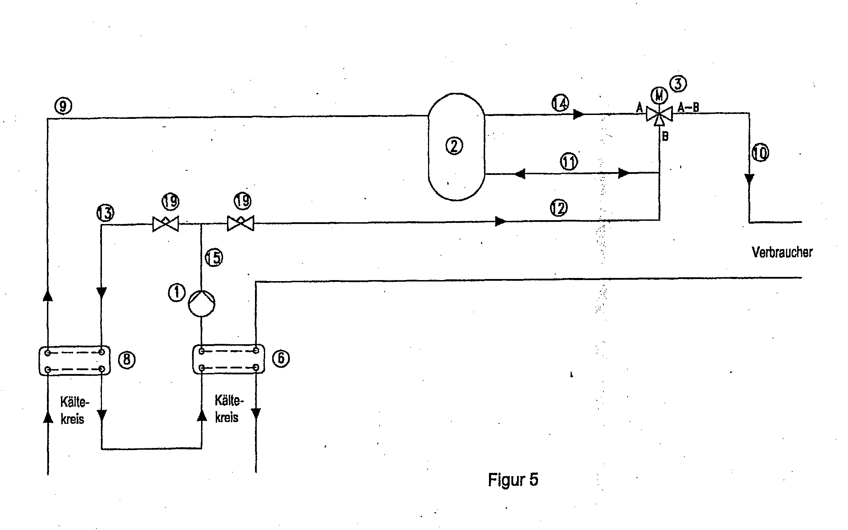

Ähnlich wie in Fig. 4 kann gemäß der Ausführungsform nach Fig. 5 der Verbraucher anstatt über einen Wärmetauscher 4 auch direkt an den Wärmeträgerkreislauf bzw. Speicherkreislauf angekoppelt sein. Weiterhin ist das zuvor eingesetzte Dreiwegeregelventil 7 in einer alternativen Ausführungsform durch zwei kostengünstigere manuelle Regelventile 19 in den Rohrleitungen 12 und 13 ersetzt worden.

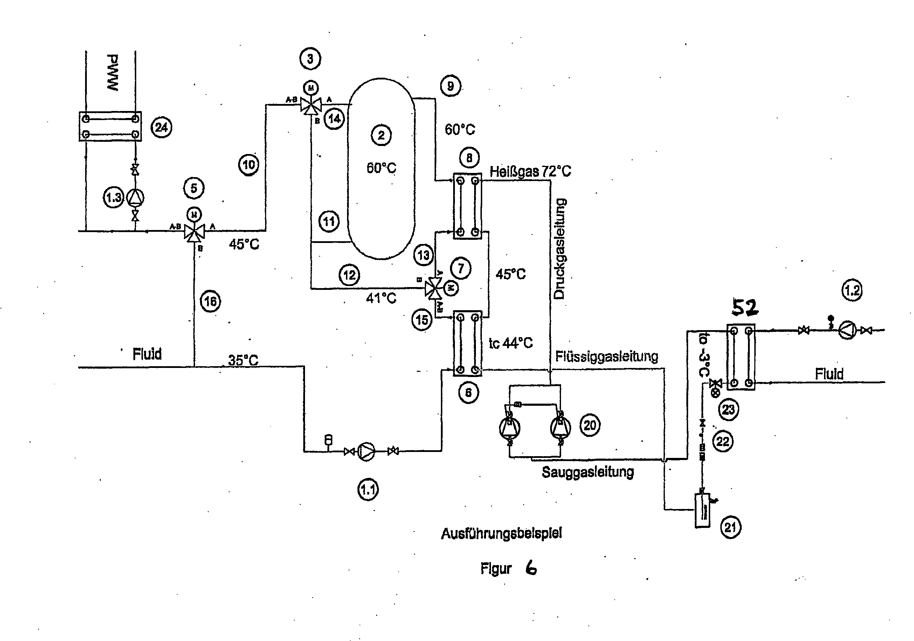

Fig. 6 zeigt eine Darstellung von Temperaturen die sich in einem Hydraulikmodul und Kältekreis einstellen können.

Die Anordnung entspricht weitgehend denjenigen der Figuren 3 bis 5. Im Wesentlichen ist hier die genannte Anordnung um bislang noch nicht beschriebene Elemente der Wärmepumpe ergänzt. Ein Wärmeaustauscher 52 zur Energieaufnahme aus einem Fluid, das von einer Pumpe 1.2 in einem Sekundärkreislauf gefördert wird, ist mit einem Verdichter 20 gekoppelt. Der Flüssiggasleitung, die vom Wärmetauscher 52 zum Verflüssiger (Wärmetauscher) 6 der Wärmepumpe führt, ist ein Sammler 21, eine Filtertrocknergruppe 22 und ein Expansionsventil 23 zur Behandlung des verflüssigten Arbeitsmittels (Kältemittels) zugeordnet. Verbraucherseitig ist im Kreislauf des Wärmeträgers ein Wärmeaustauscher 24 zur Erzeugung von Pumpenwarmwasser PWW vorgesehen. Der Wärmetauscher 24 wird mittels Pumpe 1.3 mit Wärmeträger durchströmt. An den jeweiligen Übergabestellen der Kreisläufe sind beispielhaft die sich einstellenden Arbeitstemperaturen eingetragen.

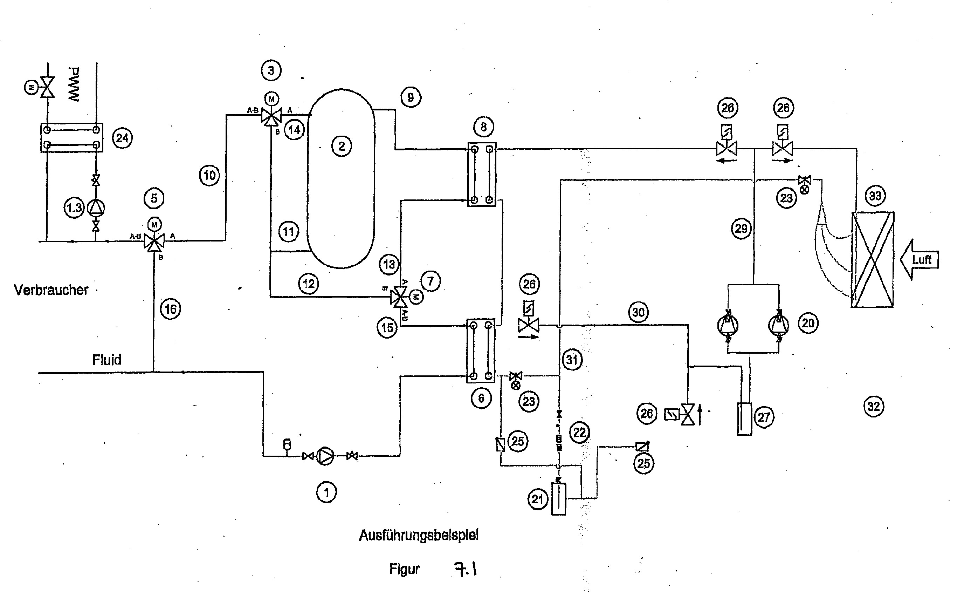

Die Figuren 7.1 bis 7.4 zeigen je eine Luft-Wasser-Wärmepumpe mit einem umschaltbaren Kältekreis für eine Abtauschaltung. Es wird darauf geachtet, den Wirksinn der Wärmeaustauscher im Luftstrom (Gleichstrom oder Gegenstrom) nicht umzukehren.

Fig. 7.1 zeigt eine Luft-Wasser-Wärmepumpe mit optional nach geschaltetem Wärmeaustauscher, mit welchem Energie (PWW) in oder aus dem System ausgetauscht werden kann. Verbraucherseitig ist der Wärmeaustauscher 24 vorgesehen.

Auf der Seite der Wärmepumpe ist ein Wärmeaustauscher 33 vorgesehen, der über eine Druckgasleitung 29 und automatische Ventile 26 in den Energiekreislauf eingebunden werden kann, so dass eine optionale Führung des Arbeitsmittels (Kältemittels) direkt zum Enthitzer 8 oder zum Wärmetauscher 33 möglich wird. Der Energietransport vom Wärmetauscher 33 wird über ein Expansionsventil 23 und eine Flüssigkeitsleitung 31 zu den bereits beschriebenen Behandlungsstationen 21, 22 des Arbeitsmittels (Kältemittels) geführt.

Die Verbindung des Verdichters 20 zum Verflüssiger (Wärmetauscher) 6 ist über ein automatisches Ventil 26, eine Saugdruckleitung 30 und einen Rückflussverhinderer 25 geführt. Weiterhin ist hier ein Flüssigkeitsabscheider 27 vorgesehen. Mittels einer Sauggas/Flüssigkeitsleitung 32 wird weiterhin eine über ein Ventil 26 schaltbare und geschützt durch Rückflussverhinderer 25 geführte Verbindung zwischen dem Wärmetauscher 33 und dem Verflüssiger (Wärmetauscher) 6 geschaffen.

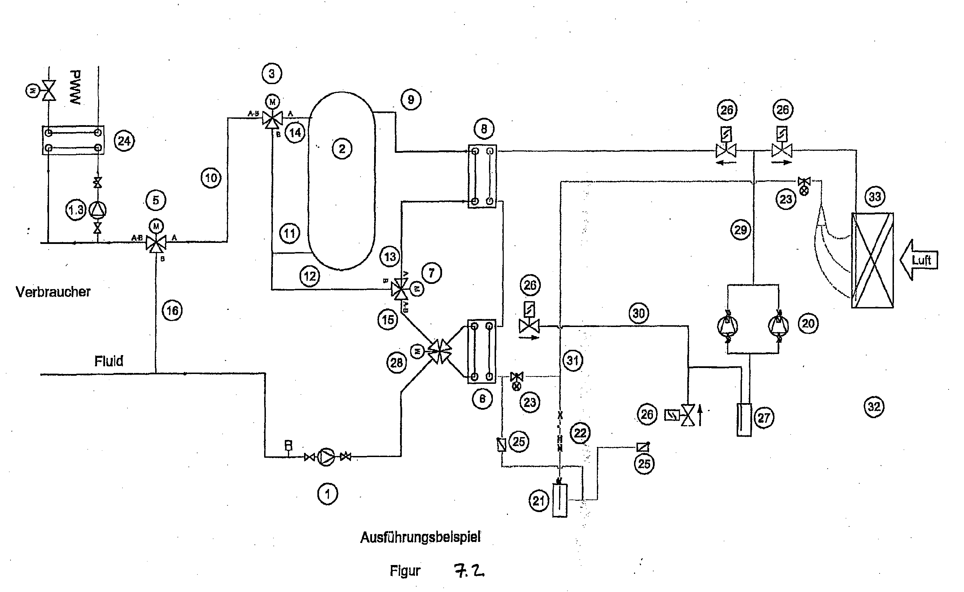

Fig. 7.2 zeigt die Luft-Wasser-Wärmepumpe nach Fig. 7.1 jedoch mit hydraulischer Umschaltung des Wärmeträgers damit der Verflüssiger (Wärmetauscher) 6 ausschließlich nach dem Gegenstromprinzip arbeitet. Hier zu ist in der Verbindung des Verflüssigers (Wärmetauschers) 6 zum Speicherkreislauf ein Vierwegeventil 28 vorgesehen, so dass je nach Wirkrichtung des Wärmepumpenkreislaufes, die Strömungsrichtung auf Seiten des Speicherkreislaufes einstellbar ist.

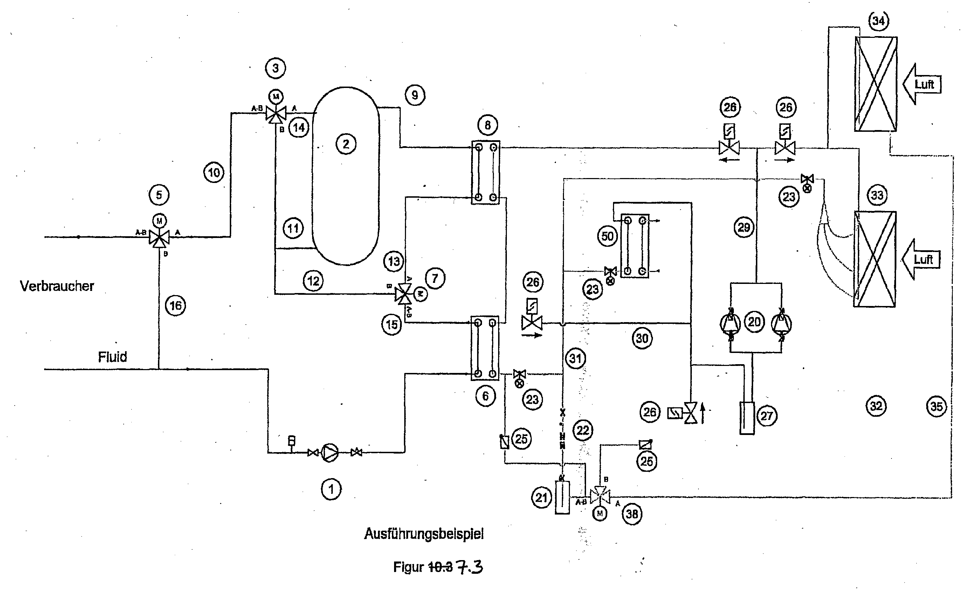

Fig. 7.3 zeigt eine Luft-Wasser-Wärmepumpe nach Fig. 7.1 mit einem Wärmeaustauscher 34 der zusätzlich parallel zum Wärmetauscher 33 geschaltet ist, zur Verteilung der Kondensationswärme. Mit einem weiteren Wärmetauscher 50 kann eine zusätzliche Wärmequelle für den Wärmepumpenbetrieb genutzt werden.

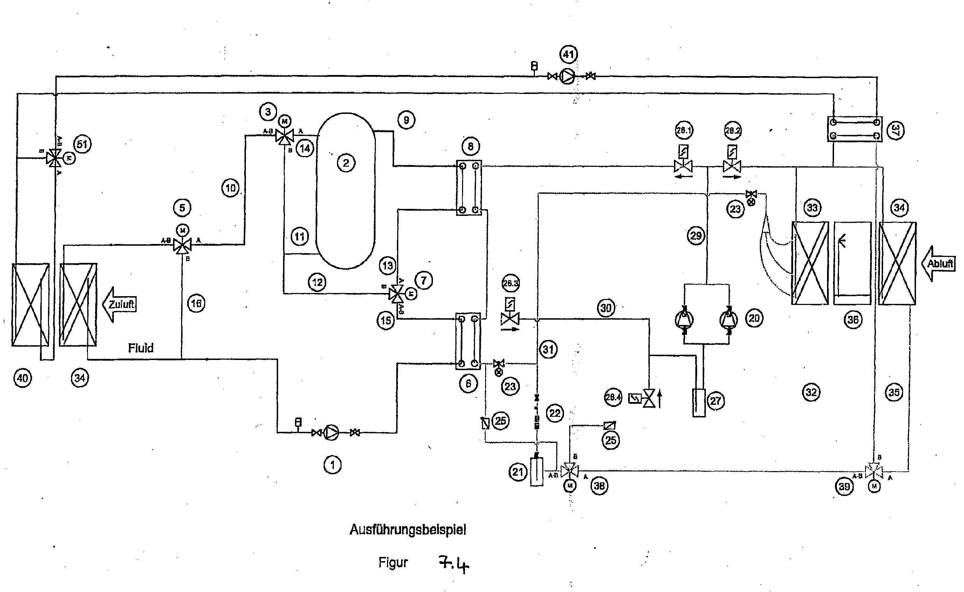

Fig. 7.4 zeigt eine umschaltbare Luft-Wasser-Wärmepumpe nach Fig. 7.1 für den Heiz- und Kühlbetrieb mit Luftentfeuchtung am Beispiel eines Lüftungsgeräts. Für den Kühlfall der Zuluft werden die Wärmetauscher 33 und 34 als Kondensatoren genutzt. Zur Steigerung der Kondensationsleistung kann vor Wärmetauscher 33 ein adiabatischer Befeuchter eingesetzt werden. Zur weiteren Leistungssteigerung kann auch vor Wärmeaustauscher 34 eine adiabatische Kühlung 36 eingesetzt werden. Der Verflüssiger (Wärmetauscher) 6 wird als Verdampfer eingesetzt und erzeugt somit kaltes Fluid. Ventil 26.1 ist geschlossen und der Enthitzer somit außer Funktion. Mit Wärmetauscher 37 wird dem Kältekreis Energie entnommen und über den Wärmeträger mit Umwälzpumpe 41 zum Wärmetauscher 40 transportiert. Der Wärmetransport ist über ein Dreiwegeventil 51 dem Wärmetauscher 40 in einer Bypass-Verbindung gesteuert zuleitbar

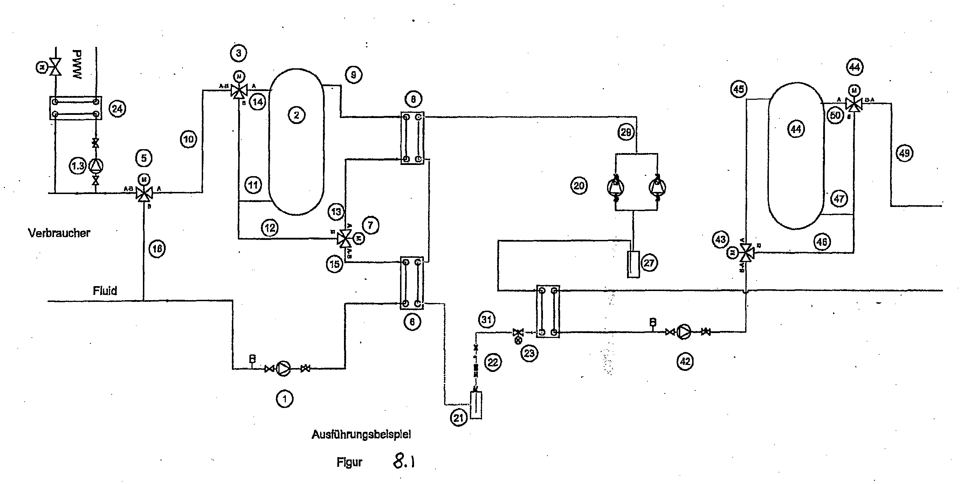

Fig. 8.1 zeigt eine Wasser-Wasser-Wärmepumpe mit Energiepufferung auf der kalten und warmen Wärmeträgerseite. Mittels einer Umwälzpumpe 42 wird Wärmeträger von einem Wärmeaustauscher 50 über zwei Dreiwegeventile 43, 44 und Rohrleitungen 45 bis 49 einem Speicherbehälter 51 geführt. So kann mittels der Dreiwegeventile 43, 44 gesteuert im Kreislauf der Wärmepumpe in dem Speicherbehälter 51 kalter / warmer Wärmeträger gespeichert werden, während gleichzeitig auf der Seite des Speicherkreislaufes umgekehrt warmer / kalter Wärmeüberträger in dem Speicherbehälter (Pufferspeicher) 2 Speicherbar ist. Selbstverständlich sind beide Speicherbehälter (Pufferspeicher) 2, 51 ebenfalls als Schichtspeicher betreibbar.

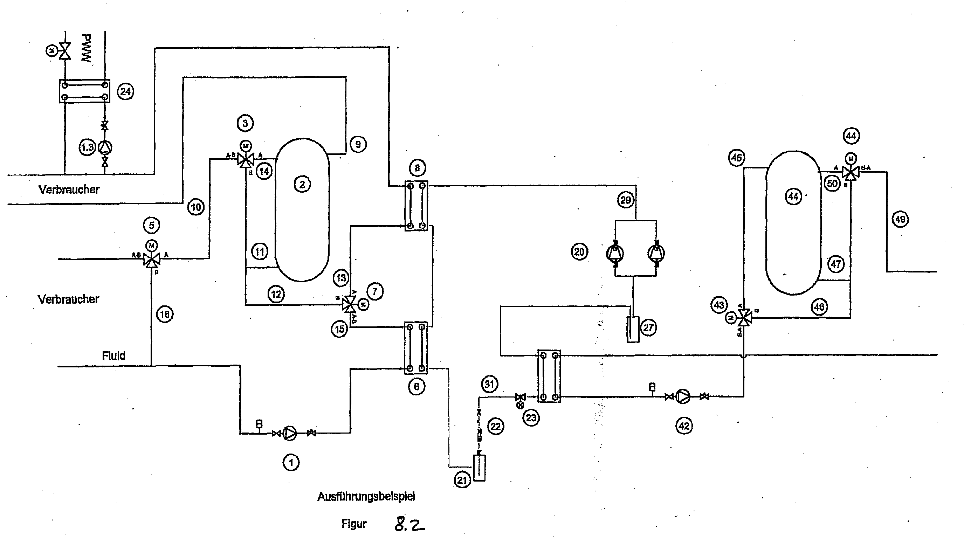

Fig. 8.2 zeigt eine Wasser-Wasser-Wärmepumpe mit Energiepufferung auf der kalten und warmen Wärmeträgerseite entsprechend Fig. 8.1. Hier ist eine externe Wärmequelle innerhalb einer Rohrleitung 9 für den bivalenten Betrieb der Anlage vorgesehen. Die externe Wärmequelle kann als Elektroheizung ausgebildet werden. Über die Rohrleitung 9 wird hierbei warmer Wärmeträger an der Oberseite des Speicherbehälters (Pufferspeicher) 2 zugeführt. Die so zusätzlich gespeicherte Wärme kann dann bei Bedarf an den Verbraucher, auch zur Gewinnung von Pumpenwarmwasser PWW abgegeben werden. Der Enthitzer 8 ist hier zufuhrseitig direkt mit dem Verbraucher gekoppelt. Die Speichersteuerung des Wärmeträgers erfolgt dann über die Einkoppelstelle des Dreiwegeventils 7.

In allen Ausführungsformen ist eine Verteilung der Wärmeträgervolumenströme mit Handarmaturen anstatt mit motorisch verstellbaren Ventilen möglich. Motorische Antriebe können auch durch magnetische Antriebe ersetzt werden.
- Umwälzpumpe: 1
- Speicherbehälter: 2
- Dreiwegeventil: 3
- Wärmetauscher: 4
- Dreiwegeventil: 5
- Enthitzer: 6
- Dreiwegeventil: 7
- Verflüssiger: 8
- Rohrleitung: 9 bis 16
- Dreiwegeventil: 17
- Rohrleitung: 18
- manuelle Regelventile: 19
- Verdichter: 20
- Sammler: 21
- Filtertrocknergruppe: 22
- Expansionsventil: 23
- Wärmeaustauscher: 24
- Rückflussverhinderer: 25
- Automatisches Ventil: 26
- Flüssigkeitsabscheider: 27
- Vierwegevetil: 28
- Druckgasleitung: 29
- Saugdruckleitung: 30
- Flüssigkeitsleitung: 31
- Sauggas/Flüssigkeitsleitung: 32
- Wärmeaustauscher: 33, 34
- Rohrleitung: 35
- Wärmeaustauscher: 36, 37
- Dreiwegeventil: 38, 39
- Wärmeaustauscher: 40
- Umwälzpumpe: 41, 42
- Dreiwegeventil: 43, 44
- Rohrleitung: 45 bis 49
- Wärmeaustauscher: 50
- Dreiwegeventil: 51
- Wärmetauscher: 52

## Patentansprüche

1. Wärmepumpe mit einer Vorrichtung zur Steuerung der Heizleistung der Wärmepumpe, mit einem Speicherkreislauf für ein Wärmeträgermedium, wobei in dem Speicherkreislauf ein Speicherbehälter (2) vorgesehen ist, in dem Wärmeenergie des Wärmeträgermediums pufferbar ist,
**dadurch gekennzeichnet,**
**dass** im Speicherkreislauf des Wärmeträgermediums ein Verflüssiger (6) und ein Enthitzer (8) der Wärmepumpe angeordnet sind und dass ein Dreiwegeventil (7) oder zwei manuelle Regelventile (19) so vorgesehen sind, dass ein Volumenstrom des Wärmeträgermediums von dem Verflüssiger (6) der Wärmepumpe dem Enthitzer (8) steuerbar zugeleitet werden kann derart dass der Anteil des Wärmeträgermediums zum Nacherwärmen durch den Enthitzer (8) gesteuert wird.

2. Wärmepumpe nach Anspruch 1,
**dadurch gekennzeichnet,**
**dass** im Kältekreislauf der Wärmepumpe das Wärmeträgermedium vom Enthitzer (8) zum Verflüssiger (6) der Wärmepumpe hin zuleitbar ist.

3. Wärmepumpe nach Anspruch 1 und 2,
**dadurch gekennzeichnet,**
**dass** der Verflüssiger (6) und der Enthitzer (8) im Kreislauf des Wärmeträgermediums in Reihe geschaltet sind.

4. Wärmepumpe nach Anspruch 1 und 2,
**dadurch gekennzeichnet.**
**dass** der Verflüssiger (6) und der Enthitzer (B) im Kreislauf des Wärmeträgermediums parallel geschaltet sind.

5. Wärmepumpe nach Anspruch 1 bis 4,
**dadurch gekennzeichnet.**
**dass** bei der Steuerung der Volumenstroms des Wärmeträgermediums vom Verflüssiger (6) zum Enthitzer (8) wenigstens ein Teilvolumenstrom mittels Rohrleitungen (13, 15, 9) über eine Steuer- oder Fördereinrichtung dem Enthitzer (8) und danach einem Speicherkreislauf und der weitere Teilvolumenstrom über Rohrleitungen (15, 12, 18) direkt dem Verbraucher und/oder ebenfalls dem Speicherkreislauf zuführbar ist.

6. Wärmepumpe nach Anspruch 1 bis 5,
**dadurch gekennzeichnet, dass** der Verflüssiger (6) und Enthitzer (8) kältetechnisch separat schaltbar sind, um den Verflüssiger (6) auch als Verdampfer betreiben zu können, so daß die Wärmepumpe umschaltbar ist, wobei dann der Enthitzer (8) außer Funktion ist.

7. Wärmepumpe nach Anspruch 1 bis 6,
**dadurch gekennzeichnet, dass** der Enthitzer (8) im Speicherbehälter (2) eingebettet wird oder außerhalb des Speicherbehälters (2) angebracht wird.

8. Wärmepumpe nach Anspruch 1 bis 7,
**dadurch gekennzeichnet,**
**dass** im Wärmeträgerkreislauf an beliebiger Stelle in der Rohrleitung oder Behälter ein weiterer Wärmetauscher (24) integriert wird, um z.B. eine hydraulische Trennung zwischen zwei Wärmeträgern zu erreichen, wobei als zweiter Wärmeträger auch eine Brauchwassererwärmung anzusetzen ist oder
**dass** im Wärmeträgerkreislauf an beliebiger Stelle ein oder weitere Wärmetauscher integriert wird/werden, um z.B. eine hydraulische Trennung zwischen mehreren Wärmeträgern zu erreichen, wobei als weiterer Wärmeträger auch eine Brauchwassererwärmung oder ein Wärmeträger von z.B. einem Heizkessel für den bivalenten Betrieb anzusetzen ist.

9. Wärmepumpe nach Anspruch 1 bis 8,
**dadurch gekennzeichnet,**
**dass** mehrere Hydraulikmodule parallel geschaltet werden.

10. Wärmepumpe nach Anspruch 1 bis 9,
**dadurch gekennzeichnet, dass** ein oder mehrere Pumpen (1) parallel geschaltet werden und/oder dass ein oder mehrere Pumpen (1) parallel drehzahlgeregelt geschaltet werden.

11. Wärmepumpe nach Anspruch 1 bis 10,
**dadurch gekennzeichnet, dass** im Speicherkreis und/oder im Wärmepumpenkreis ein oder mehrere Temperaturfühler und/oder Durchflussmengenfühler zur feineren Regelung des Systems angeordnet sind.

12. Wärmepumpe nach Anspruch 1 bis 11,
**dadurch gekennzeichnet, dass** in den Medienkreisläufen für kalten und warmen Wärmeträger je ein Speicherbehälter (2.44) vorgesehen ist.

13. Wärmepumpe nach Anspruch 1 bis 12,
**dadurch gekennzeichnet**, das für die Verflüssigung des Kältemittels und für die Verdampfung des Kältemittels ein oder mehrere Wärmeaustauscher in gleicher oder verschiedener Ausführung vorhanden sind.

14. Wärmepumpe nach Anspruch 1 bis 13,
**dadurch gekennzeichnet, dass** die Ausbildung des Kältekreises für die Wärmepumpen als Luft-Luft-Wärmepumpe ausgeführt ist und dass eine oder mehrere Vorrichtungen (26) zur Umschaltung der Strömungsrichtung des Arbeitsmediums vorgesehen sind, wobei jeder Wärmeaustauscher (33) als Verdampfer oder Verflüssiger eingesetzt werden kann.

## Claims

1. Heat pump with a device for controlling the heating capacity of the heat pump, with a storage circuit for a heat transfer medium, whereby in the storage circuit a storage vessel (2) is provided , in which the heat energy of the heat transfer medium may be stored, **characterized in,**
**that** in the storage circuit of the heat transfer medium a condenser (6) and a desuperheater (8) of the heat pump are provided and that one three-way valve (7) or two manual control valves (19) are provided in a way that a volume flow of the heat transfer medium will be controllable directed from the condenser (6) of the heat pump to the desuperheater (8) thus that the share of the heat transfer medium is directed for reheating through the desuperheater (8) controlled is.

2. Heat pump according to claim 1, **characterized in,**
**that** in the cooling circuit of the heat pump the heat transfer medium of the desuperheater (8) may be conducted to the condenser (6) of the heat pump.

3. Heat pump according to claims 1 and 2, **characterized in,**
**that** the condenser (6) and the desuperheater (8) are connected in series in the circuit of the heat transfer medium.

4. Heat pump according to claims 1 and 2, **characterized in,**
**that** the condenser (6) and the desuperheater (8) are connected in parallel in the circuit of the heat transfer medium.

5. Heat pump according to claims 1 up to 4, **characterized in ,**
**that** in controlling the volume flow of the heat transfer medium from the condenser (6) to the desuperheater (8) at least on share of the volume flow is suitable to be directed via pipes (13, 15, 9) by means of a controlling or a handling device to the desuperheater (8) and after that to a storage circuit and that the further share of the volume flow is directed via pipes (15, 12, 18) directly to a consumer or also the storage circuit.

6. Heat pump according to claims 1 up to 5, **characterized in ,**
**that** the condenser (6) and the desuperheater (8) in view of refrigeration technique are separately switchable, to operate the condenser (6) also as evaporator so that the heat pump is reversible, whereby the desuperheater (8) then is out of function.

7. Heat pump according to claims 1 up to 6, **characterized in,**
**that** the desuperheater (8) is embedded in the storage vessel (2) or is attached outside of the storage vessel (2).

8. Heat pump according to claims 1 up to 7, **characterized in ,**
**that** in the heat transfer circuit at any position of the pipes or vessels an additional heat exchanger (24) is integrated to generate an e.g. hydraulic separation between to heat transfer media, whereby a second heat transfer medium is applicable for service water warming
or that in the heat transfer medium circuit at any position one or more heat exchangers are integrated to generate e.g. a hydraulic separation between several heat transfer media, whereby a second heat transfer medium is applicable for service water warming or a heat transfer medium of a boiler for the bivalent operating.

9. Heat pump according to claims 1 up to 8, **characterized in,**
**that** several hydraulic modules are parallel connected.

10. Device pump according to claims 1 up to 9, **characterized in,**
**that** one or several pumps (1) are connected parallel and / or that one or several pumps (1) are connected parallel switched with speed control.

11. Heat pump according to claims 1 up to 10, **characterized in,**
**that** in the storage circuit or in the heat pump and / or in the heat pump circuit several temperature sensors and / or flow amount sensors are arranged for more detailed control of the system.

12. Heat pump according to claims 1 up to 11, **characterized in,**
**that** in the media circuits for cold and warm heat transfer media ever a storage vessel (2, 44) is provided.

13. Heat pump according to claims 1 up to 12, **characterized in,**
**that** one or several heat exchangers are available in the same or various embodiments for the liquefaction of refrigerant and for the evaporation of refrigerant.

14. Heat pump according to claims 1 up to 13, **characterized in ,**
**that** the design of refrigerant circuit for heat pumps is carried out as air-air heat pump and that one or several devices (26) for switching the flow direction of working fluid is provided , whereby each heat exchanger (33) can be used as evaporator or condenser.

## Revendications

1. Pompe de chaleur avec un dispositif pour la contrôle de la puissance de chauffage de la pompe de chaleur, avec un circuit d'entrepôt pour un moyen de porteur de la chaleur, à cet égard, un récipient d'entrepôt, dans lequel l'énergie de chaleur du moyen de porteur de la chaleur peut être tamponnée, est prévu au circuit d'entrepôt,
ceci est **caractérisé par**
l'arrangement d'un condenseur (6) et d'un désurchauffeur(8) de la pompe de chaleur au circuit d'entrepôt du moyen de porteur de la chaleur et aussi par la présence d'une vanne à trois voies (7) ou deux vannes de réglage manuels et de telle sorte qu'un courant de volume du moyen de porteur de la chaleur peut être amener maniablement du condenseur (6) de la pompe de chaleur au désurchauffeur, de telle sorte que le part du moyen de porteur de la chaleur pour le réchauffage est régulé par le désurchauffeur (8).

2. Pompe de chaleur selon la revendication 1,
**caractérisé par**
que, au circuit frigorifique, le moyen du porteur de chaleur peut être dirigé du désurchauffeur (8) au condenseur (6) de la pompe de chaleur.

3. Pompe de chaleur selon les revendications 1 et 2,
**caractérisé par**
la connexion en boucle du condenseur (6) et du désurchauffeur (8) au circuit du moyen du porteur de chaleur.

4. Pompe de chaleur selon les revendications 1 et 2,
**caractérisé par**
la connexion parallèle du condenseur (6) et du désurchauffeur (8) au circuit du moyen du porteur de chaleur.

5. Pompe de chaleur selon les revendications de 1 à 4,**caractérisé par** que, en cas de la commande, le courant de volume du moyen du porteur de chaleur du condenseur (6) au désurchauffeur (8), cependant un courant de volume partiel au moins, peut être alimenté directement au consommateur et/ou aussi au circuit d'entrepôt, cependant au moins un courant de volume partiel par un dispositif de contrôle ou de transport au désurchauffeur (8) et après à un circuit d'entrepôt. Un autre courant de volume partiel peut être alimenté directement à travers des conduites (15, 12, 18) au consommateur et/ou aussi au circuit d'entrepôt.

6. Pompe de chaleur selon les revendications de 1 à 5, **caractérisé par** que le condenseur (6) et le désurchauffeur (8) sont frigorifiquement commutables séparément, pour que le condenseur (6) aussi peut être utilisé comme évaporateur, de sorte que la pompe de chaleur est commutable, et alors le désurchauffeur (8) est hors service.

7. Pompe de chaleur selon les revendications de 1 à 6, **caractérisé par** l'encastrement du désurchauffeur (8) au réservoir d'entrepôt (2) ou la mise du réservoir d'entrepôt à l'extérieur.

8. Pompe de chaleur selon les revendications de 1 à 7,**caractérisé par** l'intégration d'un autre échangeur de chaleur (24) au circuit de porteur de chaleur à n'importe quel lieu dans le tuyau ou le réservoir, pour obtenir par exemple une séparation hydraulique entre deux porteurs de chaleur, de sorte qu'un échauffement des eaux sanitaires est applicable comme deuxième porteur de chaleur ou l'intégration un ou des autres échangeurs de chaleur au circuit de porteur de chaleur à n'importe quel lieu, pour obtenir par exemple une séparation hydraulique entre plusieurs porteurs de chaleur, de sorte qu'un échauffement des eaux sanitaires ou un porteur de chaleur d'une chaudière par exemple est applicable comme autre porteur de chaleur pour un fonctionnement bivalent.

9. Pompe de chaleur selon les revendications de 1 à 8, **caractérisé par** la connexion parallèle de plusieurs modules hydraulique.

10. Pompe de chaleur selon les revendications de 1 à 9, **caractérisé par** la connexion parallèle d'une ou de plusieurs pompes et/ou la connexion parallèle d'une ou de plusieurs pompes sont régulés de vitesse.

11. Pompe de chaleur selon les revendications de 1 à 10, **caractérisé par** la disposition d'un ou de plusieurs thermostats au circuit d'entrepôt et/ou au circuit de la pompe de chaleur, et/ou d'un ou plusieurs capteurs de débit quantitatives pour le réglage du système.

12. Pompe de chaleur selon les revendications de 1 à 11, **caractérisé par** que un réservoir d'entrepôt (2.44) est prévu par chaque circuit de support pour le porteur de chaleur, froid et chaud.

13. Pompe de chaleur selon les revendications de 1 à 12, **caractérisé par** l'existence d'une ou de plusieurs échangeurs de chaleur de la même version ou des versions différents pour la fluidification du fluide frigorigène et pour l'évaporation du fluide frigorigène.

14. Pompe de chaleur selon les revendications de 1 à 13, **caractérisé par** la réalisation du circuit frigorifique pour les pompes de chaleur comme l'air-l'air- pompe de chaleur, et qu' un ou plusieurs dispositifs (26) pour l'inversion du sens d'écoulement de moyen de travail sont prévus, de sorte que chaque échangeur de chaleur (33) peut être utilisé comme évaporateur ou condenseur.
